# EUROPEAN PATENT SPECIFICATION

(11) **EP 0 525 749 B1**
(45) Date of publication and mention of the grant of the patent: **15.10.1997**
(21) Application number: 92112950.8
(22) Date of filing: 29.07.1992
(51) Int. Cl.: G06F 13/16

(54) **Memory control device**
Speichersteueranordnung
Dispositif de commande de mémoire

(30) Priority: 31.07.1991 JP 214805/91
(43) Date of publication of application: 03.02.1993
(73) Proprietor: YOZAN INC., Tokyo 155 (JP); SHARP KABUSHIKI KAISHA, Osaka 545 (JP)
(72) Inventor: Kumagai, Ryohei, c/o EZEL Inc., Tokyo 112 (JP); Yang, Weikang, c/o EZEL Inc., Tokyo 112 (JP)
(74) Representative: Grünecker, Kinkeldey, Stockmair & Schwanhäusser Anwaltssozietät

(56) References cited:
- EP-A- 0 322 065
- GB-A- 2 202 978
- ELECTRONIC DESIGN vol. 34, no. 22, September 1986, HASBROUCK HEIGHTS, NEW JERSEY US pages 138 - 141 , XP211515 SIDDIQUE '100-MHZ DRAM CONTROLLER SPARKS MULTIPROCESSOR DESIGNS'
- 1990 MILITARY COMMUNICATIONS CONFERENCE 3 October 1990, MONTEREY, CA, USA pages
- 254 - 257 , XP221792 REINER ET AL. 'VLSI DEVELOPMENT OF A GLOBAL MEMORY INTERFACE CONTROLLER'
- ELECTRONIC DESIGN vol. 35, no. 10, 30 April 1987, HASBROUCK HEIGHTS, NEW JERSEY US pages 53 - 54 BURSKY 'TRIPLE-PORT DRAM FUELS GRAPHIC DISPLAYS'

## Description

The present invention relates to a memory control device, according to the preamble part of Claim 1. Such a memory control device is known from EP-A-0 322 065.

### BACKGROUND OF THE INVENTION

In recent years, a memory IC comes to have more various kinds of demands. There are a lot of demands for a memory IC to have multiport, many kinds of the way of accessing and scanning in addition to a lot of capacity and high speed processing. For the demand, a memory and another something to work as a memory which can access dual-port memory, field memory, orthogonal memory or the memory possible to access the ROI (Region of Interest) are provided or proposed.

### References:

(1) "Exclusive DRAM Placing Emphasis on User's Demand", Nikkei Electronics, May 2, 1988.
(2) "Exclusive DRAM is the Big Trend Involving in Standard Product", Nikkei Electronics, June 12, 1989.
(3) Mori, et al "Image Memory for Graphics Using Rectangle Area Access", The Journal of the Institute of Electronics, Information and Communication Engineers, March, 1989.

Each memory for serving such special demand has a simple function. A memory IC with multifunction is not necessary. Such a memory would be expensive compared to the standard DRAM.

It is the object of the present invention to provide a memory control device which may easily be adapted to different memories.
This object is solved by the subject matter of claim 1.

### BRIEF DESCRIPTION OF THE ATTACHED DRAWINGS

Figure 1 shows a block diagram of an embodiment of a memory control device.

Figure 2 shows a ground plan of the pin assignment of IC of the embodiment.

Figure 3 is a timing chart to show reading an inner register of the embodiment.

Figure 4 is a timing chart to show writing in an inner register of the embodiment.

Figure 5 is a timing chart to show the cycle of reading memory when memory is accessed in random from the host using the embodiment.

Figure 6 is a timing chart to show the cycle of writing in a memory when memory is accessed in random mode from the host using the embodiment.

Figure 7 is a timing chart to show cycle of reading memory when page mode access is executed on the memory from the host using the embodiment.

Figure 8 is a timing chart to show cycle of writing in a memory when page mode access is executed on the memory from the host using the embodiment.

Figure 9 is a timing chart of direct memory access with master mode using the embodiment.

Figure 10 is a timing chart to show the interruption for the host using the embodiment.

Figure 11 is a timing chart to show the output by handshake of input and output port in the embodiment.

Figure 12 is a timing chart to show the output by handshake of input and output port in the embodiment.

Figure 13 is a timing chart to show the synchronous output of the input and output port in the embodiment.

Figure 14 is a timing chart to show the synchronous input of the input and output port in the embodiment.

Figure 15 is a timing chart to show the sequential data output in image processing mode of input and output port in the embodiment.

Figure 16 is a timing chart to show the intermittent data output in image processing mode of input and output port in the embodiment.

Figure 17 shows a block diagram of an address generation mean of an input and output means in the embodiment.

Figure 18 show a block diagram of an input and output buffer B of an input and output port of the embodiment.

Figure 19 shows a state for memory access by the embodiment.

### PREFERRED EMBODIMENT OF THE PRESENT INVENTION

Hereinafter, an embodiment of the memory control device according to the present invention is described with reference to the attached drawings.

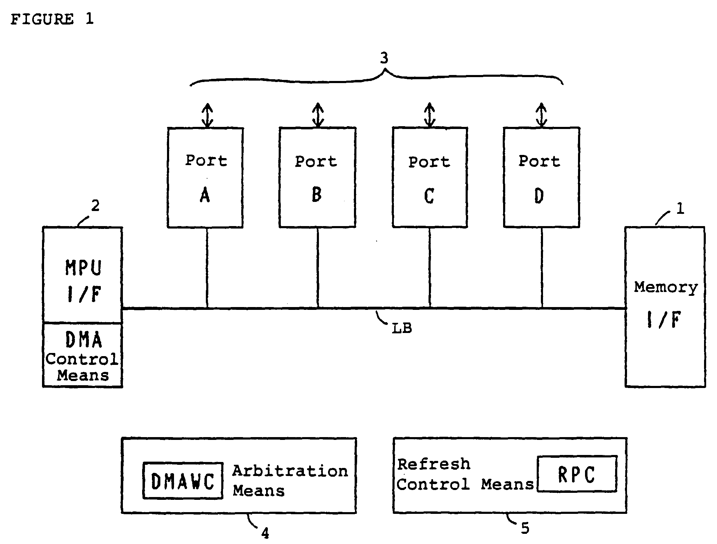

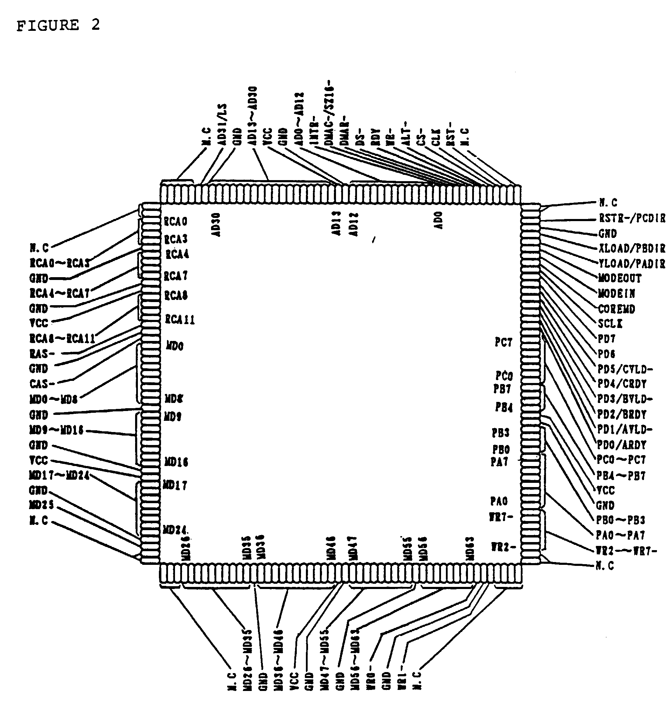

Figure 1 shows a block diagram of a memory control device MCD which comprises memory interface 1 connected to memory M and host interface 2 connected to a host of MPU and so forth through the system bus. The two interfaces are connected by local bus LB. The pin assignment of the MCD is shown in Figure 2, which is described later. In Figure 2, the codes with hyphens in the end show that they are the signals of low assert, and the numerals in the end of codes are arranged counterclockwise. In order to show the arrangement, the initial and the end of the data codes are shown inside of the device.

Connecting a plural number of the input and output port 3 to the local bus, data is timely sent and received to, or from outside and a memory interface.

The memory access between host interface 2 and input/output port 3 and the memory refresh in the refresh control means described later are controlled by mediate means 4: therefore, the interface between them is not generated.

On arbitration, considering the priority of the interfaces and ports, the interface or port with the first priority is allowed to access or refresh memory.

There are four ways for the host interface to access the memory: random access mode, page access mode, direct memory access with MCD master and direct memory access with MCD slave. The selection of the ways is settled beforehand in internal register of MCD (not shown).

Various internal registers are settled in order to settle a function and to store data of MCD. The address of memory M is once stored in the internal register of MCD (not shown).

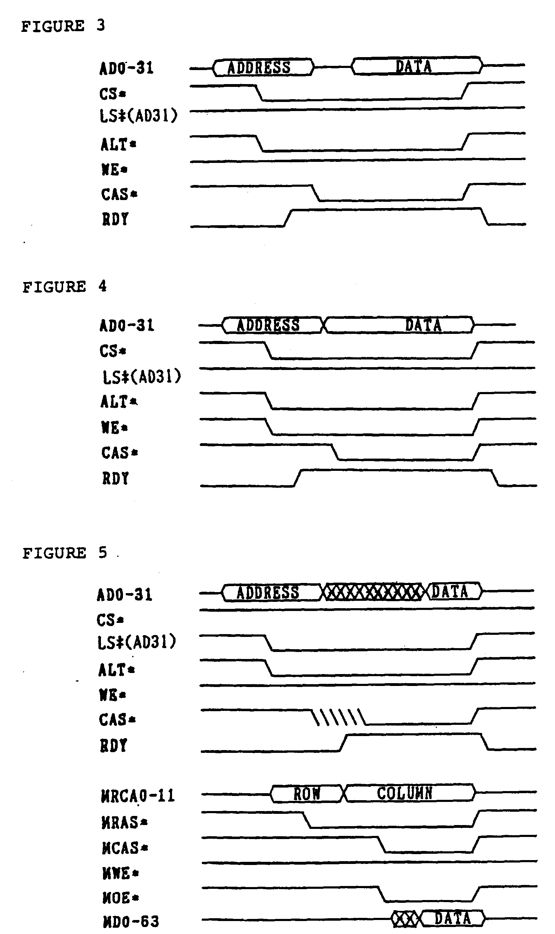

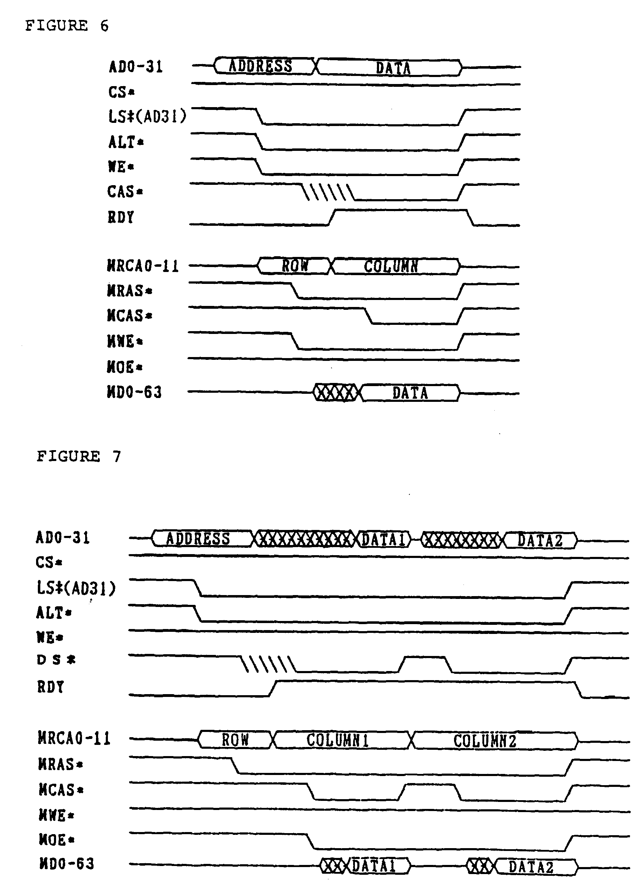

For the access to the internal register, pins from AD0 to AD31 and ALT- are used. As shown in Figures 3 and 4, pins from AD0 to AD31 are used for both of internal address and data. When ALT- is low level, an address is latched and data is input and output hereafter. Reading and writing is designated by WE- (write enable) with low assert.

Pins from AD4 to AD9 are assigned for internal register address, and AD4 to AD29 are assigned for address of memory M. As the address to be designated here is word address, the memory space MCD can control is 2²⁶× 2 bytes, that is, 2²⁷ bytes. The internal register and DRAM is selected by AD31 which is MSB of data.

In random access mode, designating the address of memory M from outside, data is read and written by 16 bits or 32 bits. Settling the length of data in the internal register, data is read and written by the predetermined cycle. Figures 5 and 6 show the read cycle and write cycle of DRAM. When the address is requested to be designated by the host, MCD samples the request of internal memory access and so forth and set RDY in low level for allowing the request of memory access of the host. After that, MCD designate low address of DRAM (12 bits) and column address (12 bits) for the memory by the 12 signal from MRCA0 to MRCA11. Address buses from AD4 to AD29 have 26 bits, by which word address of a memory is designated. The address is designated in 27 bits in total.

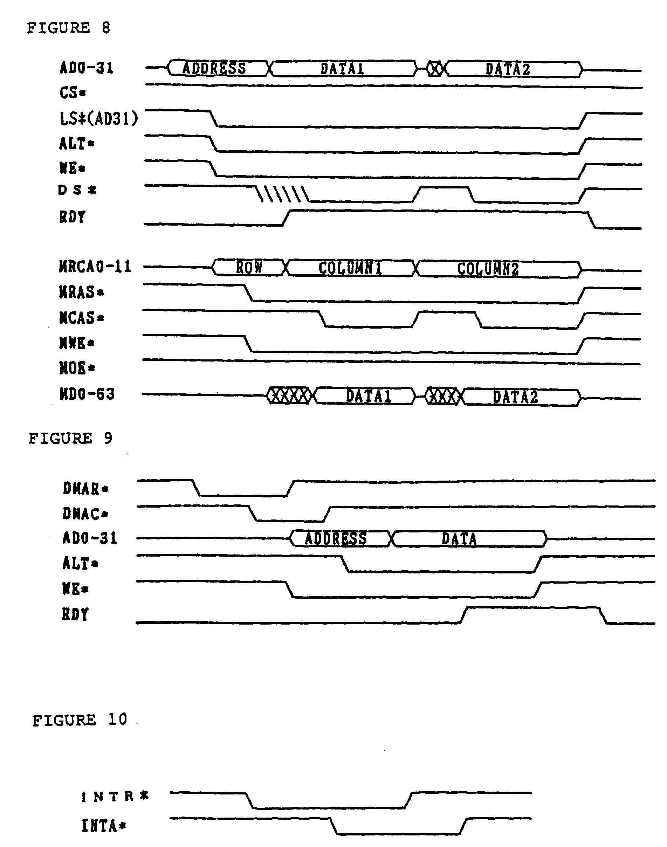

On page access mode, only start address is designated from outside, and column address is increased automatically by the control of DS signal from outside. The page mode of DRAM can be used as it is and memory access can be executed in high speed. Figures 7 and 8 show the reading and writing cycle on page access mode. Column address is increased by setting DS one in high level and next in low level after a column address if first generated. As ALT- is low level when the first address latch is completed, DS is changed seeing ALT-.

On direct memory access with MCD master, obtaining the right for use by MCD, data is transmitted as a bus master. Before executing the DMA, MCD outputs the signal of DMAR-. When system bus aribitration logic accept it (DMAC- is low level.), MCD has the right for use. Figure 9 shows a timing chart in the case of direct memory access with MCD master.

On writing mode on direct memory access with MCD slave, the writing address corresponding to memory M is renewed sequentially from start address by writing data on DMA data register of MCD from outside, and data is written. On the other hand on reading mode, IMC renews address automatically from start address, input the data of the memory into DMA data register, and output it sequentially.

With respect to the DMA above, it is possible to access the memory of ROI. It is possible to read and write from, or to a rectangle memory area with start address as a corner by registering the number of pixels of a necessary area, the number of rasters and offset (the number of pixels from the last raster pixels to the start pixel of the next raster) in the inner register beforehand. The memory access of DMA is settled with rather lower priority. The weight counter of DMA "DMAWC" is increased every time when access request is not accepted in the predetermined time. DMA is given higher priority according to the counted value as an indication, and the count is reset when the memory access request is accepted. MCD shows the completion of DMA transmission and the completion of transmission in the input and output port described later by setting interruption signal INTR-low level as shown in Figure 10. Which port has completed transmission is shown in status register of the inner register.

MCD comprises refreshment control means 5 (shown in Figure 1) for controlling refreshment of memory M, which refreshes memory M necessarily and sufficiently accepting memory access to the utmost. For controlling it, refreshment pending counter RPC is comprised in refreshment control means 5. The number of the counter RPC is increased when refreshment is required and it is not accepted. The priority of the refreshment is made higher according to the indication of the counted number. When once refreshment is accepted, the number is decreased.

The aforementioned input and output port 3 is the set of 4 from A to D. A, B and C give and receive data to, or from outside by two-way data bus, and work independently. Port C is used as an input-only port of an image processing mode described below, or as an input port of the control signal of ports A, B and C. These ports comprise 3 kinds of data transmission modes. The role of each port is settled beforehand in an image processing mode (described later) in the 3 kinds of modes. The 3 data transmission modes of port 3 is a handshake mode, a synchronous mode and in image processing mode.

On these transmission, MCD can perform simultaneously expansion, contraction, reverse change of direction of scanning for reading and execution change into non-interlace from interlace.

Settlement of transmission mode and other function is recorded in an inner register

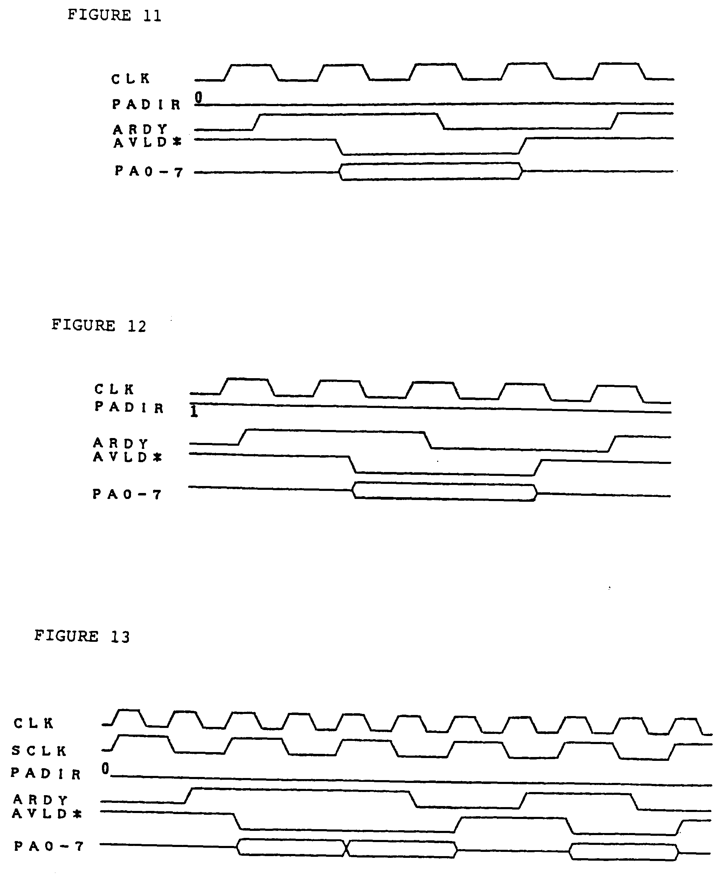

Figures 11 and 12 shows timing charts of output and input of handshake mode. ARDY signal and AVLD- signal are used for the handshake. On outputting, when ARDY signal is made high level from outside, MCD outputs data from PA0 to PA7 as soon as the data is prepared to be output, simultaneously, it makes AVLD- signal low level. AVLD- signal shows the efficiency of data. On inputting, when ARDY signal is high level, it is possible to input data. When data is input from outside and AVLD- signal is low level, the data is latched. Here in figures, the signal name (pin assignment) of port A is representatively shown: concerning to other ports, the signals substituted B, C and D for A are used.

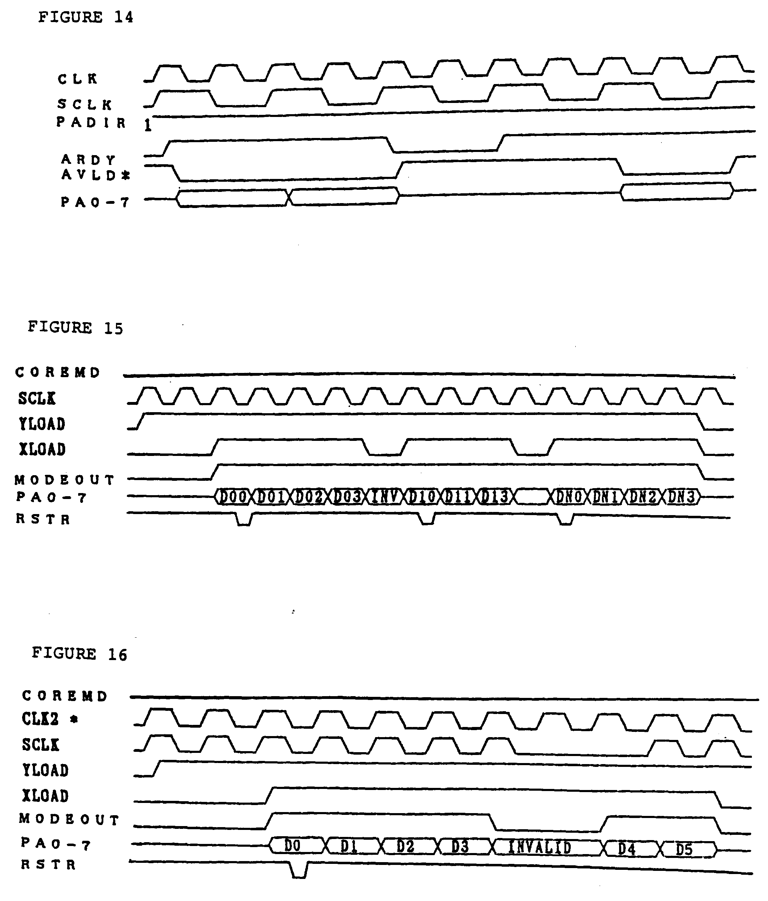

Figures 13 and 14 show timing charts of input and output in synchronous mode. Data is input and output synchronously with SCLK. When ARDY signal is mode high level from outside, MCD outputs data from PA0 to PA7 as soon as the data is prepared to be output, simultaneously, it makes AVLD- signal low level. AVLD-signal shows the efficiency of data here, too. When ARDY signal is high level, data can be input. When data is input from outside and AVLD- signal is low level in the state that ARDY signal is high level, the data is latched.

On image processing mode, ports from A to C are used for output ports and port D is used for input port. YLOAD us used for the starting signal of 1 plane (the signal is corresponding to the vertical blank of indication system), XLOAD is used for the starting signal of 1 raster (it is corresponding to the horizontal blank of indication system), MODEOUT is used for pipeline control signal of an image processing system. They are shown in Figures 15 and 16. The data to be processed is input from a memory and sent to an image processing system from ports A, B and C. The result through the image processing system is input to port D and stored in a memory. Signal MODEIN shows the effectiveness and ineffectiveness of output data of the image processing system, which can be input to MCD. Signal RSTR- is a timing signal for sequential processing of the image processing system, which refresh the line memory for storing the previous raster before starting raster scan. This refreshment is executed with a little delay from the rising of XLOAD. Figure 15 shows an example that transmission of an image of 1 plane is executed sequentially. Figure 16 shows an example that data transmission is interrupted by making MODEOUT low level for the refreshment of memory M.

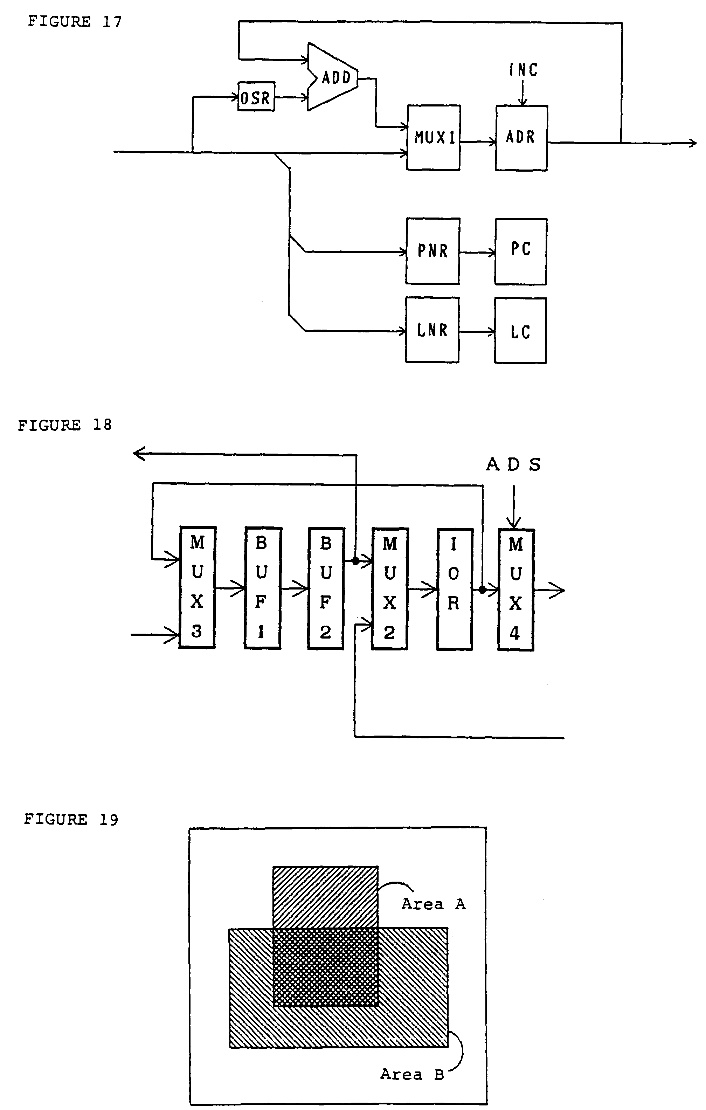

The address generation means of aforementioned input and output port and host interface is structured as in Figure 17. It comprises an address register ADR for generating address for a memory, a line number register LNR for registering the number of rasters in vertical direction of the area to be accessed, pixel number register PNR for registering the number of pixels in horizontal direction of the same area, and offset register OSR for registering the change of the coordinates with respect to horizontal direction on the movement of location for access from one raster to be next raster. PNR is connected to pixel counter PC. PC loads the data of PNR just before the access to a raster, and decreases the counted number every time when accessing data corresponding to a pixel. LNR is connected to line counter LC. LC loads the data of LNR just before the access to rectangle area, and decrease the counted number every time completing 1 raster of access. It it possible to designate the end points of a raster and of the area on access to the rectangle area above by these steps. When an access to a memory is started, start address is registered in address register ADR. The address number is increased by increment signal INC. The memory address to make an access is calculated appropriately according to the data of LC and PC. The address value is output from MRCA0 to MRCA11 after it is given to address register ADR. The coordinates in vertical direction of an image is increased every time 1 raster is completed. The coordinates in horizontal direction of an image is increased on 1 raster, but when the coordinates come to the end point, the first horizontal address of the next raster is decided by the addition of the value of ADR and OSR by adder ADD. Executing it, the start address of the next raster can be generated in high speed.

The above is the description with respect to the forward scanning. The backward scanning is describe later.

The one adder is commonly used as the address generation means of each port. A gate of a circuit is efficiently used by it.

As the address generation means above is independently set by every port, an address can be set perfectly independent of other address being set. When input and output of some ports are defined for a memory, the function of a multiport memory can be obtained. For example, as shown in Figure 19, the area A and B of a memory can be accessed by both ports A and B.

In addition to such usual address generation, it is possible to perform contraction, reverse direction scanning, transformation from interlace to non-interlace and from non-interlace to interlace.

Expansion in horizontal direction is executed by writing 1 pixel which is read out a plural number of times, and that in vertical direction is executed by writing the same raster a plural number of times.

Contraction in horizontal direction is executed by reading pixels intermittently, and that in vertical direction is executed by reading rasters intermittently.

Reverse direction scanning is executed by inputting a decrement signal instead of an increment signal so as to reverse the order of generation of addresses.

Transformation from interlace to non-interlace and that from non-interlace to interlace are executed by i) regarding the offset on writing as the number of pixels of 1 raster, it is input by every other raster, ii) the image is input on a vacant raster in the next frame.

An input and output buffer B is comprised in each port in order to input and output memory data to, and from input and output port 3 as shown in Figure 18. Buffer B comprises the first buffer BUF1 which is connected to input side of memory interface and the second buffer which is arranged to follow BUF1. Buffer BUF1 is a buffer with 64 bits for storing data of 64 bits outputted from a memory. When 64 bits data is inputted to BUF1, the data is immediately transmitted to BUF2. Consequently, reading of 128 bits is sequentially executed, which means that it is possible to input data in high speed. Input and output register IOR is connected on output side of buffer BUF2 through multiplexer MUX2. MUX2 inputs data to a port. Alternatively, it output data from BUF2.

When the output of a memory is outputted from a port, MUX2 inputs the output of BUF2 to IOR. IOR outputs data 64 bits by 8 bits in parallel and inputs them to multiplexer MUX4. Address signal ADS is already inputted to MUX4. MUX4 selects 8 bits of data from 1 line from the outputs of IOR and selects all the 8 bits or only 1 bit from the 8 bits of data. The selected data is outputted from a port. In this way, the data of a memory can be outputted bitwise to a port. The input to a port is inputted to multiplexer MUX2. Then the input is transmitted to a memory. MUX 2 selects and inputs to IOR. The data of IOR is transmitted to a memory from BUF2 via MUX3 to BUF1. The data of BUF1 is immediately transmitted to BUF2 also on this data input, and memory is written by 128 bits. Therefore it is possible to input data in high speed.

The memory control device according to the present invention permits: i) controlling an address of a memory, also controlling reading from and writing in the memory through a memory interface, ii) data is given and received to and from outside, respectively, by the memory through a memory interface, iii) accessing a memory in random and accessing a memory directly through the host interface, iv) controlling various actions with respect to the memory control device, and v) accessing to the memory in high speed through a plural number of input and output ports. For this, standard DRAM can be used to obtain in effect a multiport memory.

## Claims

1. A memory control device comprising:
a memory interface (1) connected to a memory for outputting an address of said memory and controlling reading and writing;
a plural number of input and output ports (A,B,C,D) connected to said memory interface through a local bus (LB);
a host interface (HPU) connected to said memory interface through said local bus;
a refresh control means (5) for refreshing said memory through said memory interface; and
an arbitration means (4) for arbitrating requirements for refreshment from said refresh control means and for memory access from said input and output ports and from said host interface,
said input and output port and host interface comprising,
a start address register (ADR) for registering a start address for accessing said memory:
a size register (PNR,LNR) for registering the size of a rectangle area for accessing said memory;
an offset register (OSR) for registering an offset of a column address;
an addition means (ADD) for adding said offset to the column address on completing accessing of low address in said rectangle area,
first and second buffer means (BUF1, BUF2), an input/output register means (IOR) and first and second multiplexer means (MUX3,MUX2),
**characterized in that**
said first multiplexer means (MUX3), first buffer means (BUF1), second buffer means (BUF2), second multiplexer means (MUX2) and input/output register means (IOR) are serially connected such that data output from the respective input/output port is input to the first buffer means (BUF1) via the first multiplexer means (MUX3) and is output from the input/output register means (IOR),
wherein said input/output register means has from its output a connection to an input of the first multiplexer means (MUX3) and wherein data received for storing in the memory means is applied to the second multiplexer means, in that the second multiplexer means is arranged to switch between data received from the second buffer means and data received for storing in the memory means and in that said first multiplexer means is arranged to switch between data received from the input/output register means (IOR) via said connection and data received for outputting,
whereby data received for storing is applied to the input/output register means (IOR) via the second multiplexer means (MUX2) and is forwarded from the input/output register means (IOR) to said memory means via said first multiplexer means (MUX3) and said first buffer means (BUF1) to said second buffer means (BUF2) and from there to said memory means.

2. A memory control device claimed in claim 1, whose input/output register means (IO) is comprised of register groups for storing only strings of 1 byte, wherein a byte selection means (MUX4) for selecting one of these registers is connected to an output of the input/output register means.

3. A memory control device claimed in claim 2, wherein a bit selection means is arranged to output 1 bit selectively from a register.

4. A memory control device claimed in claim 1, wherein said addition means for an input and output port is comprised of one input and output port common to all the input and output ports.

## Patentansprüche

1. Speichersteuereinrichtung mit:
einem Speicher-Interface (1), das mit einem Speicher verbunden ist und dazu dient, eine Adresse des Speichers auszugeben und das Lesen und Schreiben zu steuern;
einer Anzahl von Ein- und Ausgangsports (A, B, C, D), die mit dem Speicher-Interface über einen lokalen Bus (LB) verbunden sind;
einem Host-Interface (HPU), das mit dem Speicher-Interface über den lokalen Bus verbunden ist;
einer Wiederauffrischungssteuereinrichtung (5) zum Auffrischen des Speichers über das Speicher-Interface; und
einer Schiedseinrichtung (4) zum Regeln der Wiederauffrischungszugriffe der Wiederauffrischungssteuereinrichtung und der Speicherzugriffe von den Ein- und Ausgangsports sowie von dem Host-Interface,
wobei die Ein- und Ausgangsports und das Host-Interface aufweisen:
ein Startadreßregister (ADR) zum Speichern einer Startadresse für den Zugriff auf den Speicher;
ein Größenregister (PNR, LNR) zum Speichern der Größe eines rechteckförmigen Zugriffsbereiches für den Speicher;
ein Offset-Register (OSR) zum Speichern eines Offsets für eine Spaltenadresse;
eine Additionseinrichtung (ADD) zum Addieren des Offsets zu der Spaltenadresse, wenn ein Zugriff auf eine untere Adresse des rechteckförmigen Gebietes erfolgt ist,
erste und zweite Puffer-Einrichtungen (BUF1, BUF2), eine Ein-/ Ausgangsregister-Einrichtung (IOR) und erste und zweite Multiplexer-Einrichtungen (MUX3, MUX2),
dadurch gekennzeichnet, daß
die erste Multiplexer-Einrichtung (MUX3), die erste Puffer-Einrichtung (BUF1), die zweite Puffer-Einrichtung (BUF2), die zweite Multiplexer-Einrichtung (MUX2) und die Ein-/ Ausgangsregister-Einrichtung (IOR) in Serie miteinander verbunden sind, derart, daß der Ausgang von dem entsprechenden Eingangs-/Ausgangsport der ersten Puffereinrichtung (BUF1) über die erste Multiplexer-Einrichtung (MUX3) zugeführt wird und von der Ein-/Ausgangsregister-Einrichtung (IOR) ausgegeben wird,
wobei die Ein-/Ausgangsregister-Einrichtung von ihrem Ausgang eine Verbindung zu einem Eingang der ersten Multiplexer-Einrichtung (MUX3) aufweist und wobei Daten, die zum Speichern in der Speichereinrichtung empfangen werden, der zweiten Multiplexer-Einrichtung zugeführt werden, so daß die zweite Multiplexer-Einrichtung in der Lage ist, zwischen Daten, die von der zweiten Puffer-Einrichtung empfangen wurden und Daten, die für das Speichern in der Speichereinrichtung empfangen wurden, umzuschalten und daß die erste Multiplexer-Einrichtung in der Lage ist, zwischen Daten umzuschalten, die von der Ein-/ Ausgangsregister-Einrichtung (IOR) über die Verbindung empfangen wurden und Daten, die zum Ausgeben empfangen wurden,
wobei die Daten, die zum Speichern empfangen wurden, der Ein-/ Ausgangsregister-Einrichtung (IOR) über die zweite Multiplexer-Einrichtung (MUX2) zugeführt werden und von der Ein-/Ausgangsregister-Einrichtung (IOR) an die Speichereinrichtung über die erste Multiplexer-Einrichtung (MUX3) und die erste Puffer-Einrichtung (BUF1) zu der zweiten Puffer-Einrichtung (BUF2) und von dort zur Speichereinrichtung weitergegeben werden.

2. Speichersteuereinrichtung nach Anspruch 1, wobei die Ein-/ Ausgangsregister-Einrichtung (IOR) eine Registergruppe zum Speichern von Strings mit nur einem Byte besteht, wobei eine Byte-Auswahleinrichtung (MUX4) zum Auswählen eines dieser Register mit einem Ausgang der Ein-/Ausgangsregister-Einrichtung verbunden ist.

3. Speichersteuereinrichtung nach Anspruch 2, wobei eine Bit-Auswahleinrichtung vorgesehen ist, die ein Bit selektiv von dem Register ausgeben kann.

4. Speichersteuereinrichtung nach Anspruch 1, wobei die Additionseinrichtung für einen Eingangs- und Ausgangsport aus einem Eingangs- und Ausgangsport besteht, der allen Eingangs- und Ausgangsports gemeinsam ist.

## Revendications

1. Dispositif de commande de mémoire comprenant :
une interface de mémoire (1) connectée à une mémoire pour délivrer une adresse de ladite mémoire et commander la lecture et l'écriture ;
plusieurs ports d'entrée et de sortie (A, B, C, D) connectés à ladite interface de mémoire par un bus local (LB) ;
une interface d'ordinateur principal (HPU) connectée à ladite interface de mémoire par ledit bus local ;
un moyen de commande de régénération (5) pour régénérer ladite mémoire à travers ladite interface de mémoire ; et
un moyen d'arbitrage (4) pour arbitrer les exigences de régénération venant dudit moyen de commande de régénération et accéder à la mémoire depuis lesdits ports d'entrée et de sortie et depuis ladite interface d'ordinateur principal,
lesdits ports d'entrée et de sortie et ladite interface d'ordinateur principal comprenant :
un registre d'adresse de départ (ADR) destiné à enregistrer une adresse de départ pour accéder à ladite mémoire ;
un registre de dimension (PNR, LNR) pour enregistrer la dimension d'une zone rectangulaire d'accès à ladite mémoire ;
un registre de décalage (OSR) pour enregistrer un décalage d'une adresse de colonne ;
un moyen d'addition (ADD) pour ajouter ledit décalage à l'adresse de colonne à la fin de l'accès de l'adresse inférieure dans ladite zone rectangulaire,
un premier et un second moyen tampon (BUF1, BUF2), un moyen de registre d'entrée/sortie (IOR) et un premier ainsi qu'un second moyen multiplexeur (MUX3, MUX2),
caractérisé en ce que
lesdits premier moyen multiplexeur (MUX3), premier moyen tampon (BUF1), second moyen tampon (BUF2), second moyen multiplexeur (MUX2) et moyen de registre d'entrée/sortie (IOR) sont connectés en série de manière que les données sortant dudit port respectif d'entrée/sortie soient introduites dans le premier moyen tampon (BUF1) par l'intermédiaire dudit premier moyen multiplexeur (MUX3) et soient sorties du moyen de registre d'entrée/sortie (IOR),
dans lequel ledit moyen de registre d'entrée/sortie comporte à sa sortie une connexion à l'entrée du premier moyen multiplexeur (MUX3) et dans lequel les données reçues pour être mémorisées dans le moyen de mémoire sont appliquées au second moyen multiplexeur, en ce que le second moyen multiplexeur est configuré pour commuter entre des données reçues du second moyen tampon et des données reçues pour être mémorisées dans le moyen de mémoire, et en ce que ledit premier moyen multiplexeur est configuré pour commuter entre des données reçues du moyen de registre d'entrée/sortie (IOR) par ladite connexion et des données reçues pour être sorties,
grâce à quoi des données reçues pour être mémorisées sont appliquées au moyen de registre d'entrée/sortie (IOR) par le second moyen multiplexeur (MUX2) et sont envoyées du moyen de registre d'entrée/sortie (IOR) audit moyen de mémoire en passant par ledit premier moyen multiplexeur (MUX3) et ledit premier moyen tampon (BUF1) audit second moyen tampon (BUF2) et de là audit moyen de mémoire.

2. Dispositif de commande de mémoire selon la revendication 1, dont le moyen de registre d'entrée/sortie (IOR) est formé de groupes de registres pour mémoriser uniquement des chaînes de 1 octet, dans lequel un moyen de sélection d'octet (MUX4) pour sélectionner l'un de ces registres est connecté à une sortie du moyen de registre d'entrée/sortie.

3. Dispositif de commande de mémoire selon la revendication 2, dans lequel un moyen de sélection de bit est configuré pour sortir sélectivement 1 bit d'un registre.

4. Dispositif de commande de mémoire selon la revendication 1, dans lequel ledit moyen d'addition pour un port d'entrée et de sortie est formé d'un port d'entrée et de sortie commun à tous les ports d'entrée et de sortie.
